# EUROPEAN PATENT SPECIFICATION

(11) **EP 2 110 026 B1**
(45) Date of publication and mention of the grant of the patent: **04.05.2011**
(21) Application number: 09000385.6
(22) Date of filing: 14.01.2009
(51) Int. Cl.: A23L 1/162

(54) **Process for the production of rice pasta and product obtained thereby**
Reispasta und Verfahren zur Herstellung von Reispasta
Pâte de riz et procédé d'obtention

(30) Priority: 15.01.2008 IT mi20080051
(43) Date of publication of application: 21.10.2009
(73) Proprietor: Grugni, Guido, 27100 Pavia (IT); Mazzini, Flavio, 27029 Vigevano (PV) (IT); Riso Viazzo S.r.l., 13040 Crova (VC) (IT)
(72) Inventor: GRUGNI, Guido, Pavia (IT); MAZZINI, Flavio, Vigevano ( Pavia ) (IT); VIAZZO, Guiseppe, Crova ( Vercelli ) (IT); VIAZZO, Nicola, Crova ( Vercelli ) (IT)
(74) Representative: Carloni, Franco

(56) References cited:
- EP-A- 0 450 310
- EP-A- 0 738 473
- EP-A- 0 872 188
- EP-A- 1 214 890
- GB-A- 1 097 795
- US-A- 4 435 435
- US-A- 4 544 563
- US-A- 5 256 435

## Description

The present invention relates to a process for the production of rice pasta and a rice pasta obtained thereby.

Rice pasta has spread progressively over the recent years, especially because of the increasing number of consumers who are intolerant to gluten contained in wheat and other cereal grain based foods. Since it is gluten-free, alimentary rice pasta is used in dietary regimes especially for therapeutic purposes, and particularly for preventing and treating some diseases, such as celiac disease, which are caused by intolerance to food obtained from gluten containing cereal grains.

However, because of the absence of gluten, rice pasta of the kind which is generally known in the art and commercially available exhibits organoleptic characteristics and resistance to cooking which are much different from those of typical pasta made from durum wheat semolina, and this greatly limits its favour on the part of the consumers.

Many attempts have been made in the art to solve this problem, however the solutions proposed till now have appeared inadequate either because of difficulty in putting them into practice or simply because the rice pasta obtained with the known methods has not met the favour of the consumers.

An effort to solve the above-mentioned problem is known, for example, from documents EP-A-1 214 890, EP-A-0 450 310, US-A-4 544 563, US-A-4 435 435, and EP-A-0 738 473. These prior art documents disclose a process according to the preamble of claim 1.

The present invention is aimed at finding an alternative solution to the problem of obtaining a rice pasta product which is resistant to cooking, has good organoleptic characteristics, and is therefore desirable, and which in addition has nutritional characteristics which are superior to those of rice pasta as known in the art till now.

This object is achieved, according to the present invention, with a process for the production of rice pasta comprising the steps of: a) mixing rice flour with water at a temperature from 10 to 40°C, in order to obtain a dough having a moisture content of 40% by weight, b) heat treating the dough in an extruder by contact with heated walls and/or steam injection in order to obtain a semi-finished product having a temperature between 60° and 90°C, and c) kneading the semi-finished product, extruding, drawing, and finally drying the same in order to obtain a dried rice pasta with a moisture content below 15% by weight, characterised in that the rice flour in said step (a) consists of parboiled rice flour and/or parboiled brown rice flour.

The rice pasta obtained with the process of the invention has shown cooking time values and organoleptic characteristics similar to those of typical pasta made from durum wheat semolina. In addition, the pasta made from parboiled rice flour has nutritional properties which are superior to those of rice pasta produced from non-parboiled rice flour.

The rice pasta according to the invention can be produced from parboiled rice flour, parboiled brown rice, or a combination of the aforesaid flours.

By the term "parboiled brown rice" it is intended the product which is obtained from the process of husking paddy rice to completely remove the husk, and in which the starch is completely gelatinised by subjecting paddy or husked rice to a hydrothermal process. By the term "parboiled rice" it is intended the product which is obtained from the process of husking paddy rice to completely remove the husk and further milling the husked rice to partially or completely remove the rice bran and germ, and in which the starch is completely gelatinised by subjecting the paddy or husked rice to a hydrothermal process.

The parboiled brown rice or parboiled rice flour is obtained from a variety of rice having a high content of amylose, preferably not less than 24% by weight.

In relation to the varieties of rice that can be utilised in the present invention, one may also consider to use particular varieties of rice which, on account of their biological characteristics, exhibit a pigmented bran. During the parboiling process of these varieties of rice, the pigments which are present in the rice bran diffuse into the whole rice grain, giving it an intense colour which is a characterisc of the variety of rice used. The husked parboiled rice and the milled parboiled rice thus obtained are further subjected to a milling process in order to obtain naturally coloured rice flours which can be used, either individually or in combination one with the other, to produce a coloured rice pasta product without addition of any additive.

In the present invention varieties of rice can also be used which, on account of their biological characteristics, emanate a particular aroma.

The dough from which the rice pasta according to the invention is obtained can include additional ingredients selected in the group containing nutritional substances, vitamins, mineral salts, vegetable fibres, flavourings, colourings, binders, edible oils, and combinations thereof. In particular, rice germ, rice bran and/or other by-products of the processing of rice can be used as additional ingredients, for improving the nutritional characteristics of the rice pasta.

The invention will be now described with reference to two preferred embodiments thereof, given by way of illustration only and without limitative purpose in the following examples, so that the inventive aspects thereof may be more fully understood and appreciated.

### Example I

### List of ingredients:

| | |
|---|---|
| Parboiled rice flour (moisture 12%) | 68% by weight |
| Water | 32% by weight |

### Method of preparation:

For the preparation of the dough parboiled rice flour obtained from a variety of rice having an amylose content of 25% by weight and a moisture content of 12% by weight was used. The flour was mixed with water at a temperature of 30° C to form a homogeneous dough. After, the dough was subjected to a heat treatment in an extruder by contact with heated walls, thus obtaining a semi-finished extruded product at a temperature of 75°C. The semi-finished product was remixed, extruded, drawn and eventually dried to obtain a rice pasta product having a moisture content of 13% by weight. The rice pasta product thus obtained was cooked in boiling water for 9 minutes and after cooking it exhibited palatable characteristics similar to those of a pasta product made from durum wheat semolina.

### Example II

### List of ingredients:

| | |
|---|---|
| Parboiled brown rice flour (moisture 12%) | 68% by weight |
| Water | 32% by weight |

### Method of preparation:

A process similar to that of the preceding Example I was carried out with parboiled brown rice flour obtained from a variety of rice having an amylose content of 25% by weight and a moisture content of 12% by weight. After cooking in boiling water the rice pasta product exhibited palatable characteristics substantially similar to those of Example I.

## Claims

1. Process for the production of rice pasta comprising the steps of: a) mixing rice flour with water at a temperature from 10 to 40°C in order to obtain a dough having a moisture content of 40% by weight, b) heat treating said dough in an extruder by contact with heated walls and/or steam injection in order to obtain a semi-finished product having a temperature between 60° and 90°C, and c) kneading said semi-finished product, extruding, drawing, and finally drying the same in order to obtain a dried rice pasta with a moisture content below 15% by weight, **characterised in that** the rice flour in said step (a) consists of parboiled rice flour and/or parboiled brown rice flour.

2. Process according to claim 1, **characterised in that** the parboiled rice flour is obtained from a variety of rice having a content of amylose not less than 24% by weight.

3. Process according to claim 1, **characterised in that** in step a) the parboiled rice flour and/or the parboiled brown rice flour includes at least an additional ingredient selected in the group containing nutritional substances, vitamins, mineral salts, vegetable fibres, flavourings, colourings, binders and edible oils.

4. Process according to claim 3, **characterised in that** the additional ingredient is rice germ, rice bran and/or other by-products of the processing of rice.

5. Process according to claim 3, **characterised in that** the additional ingredient is rice germ, rice bran and/or other by-products of the processing of parboiled rice.

6. Process according to claim 3, **characterised in that** the additional ingredient is hen egg white.

7. Process according to claim 1, **characterised in that** the parboiled rice flour is obtained from a variety of rice having a pigmented bran.

8. Process according to claim 1, **characterised in that** the parboiled rice flour is obtained from a variety of rice emanating a particular aroma.

9. Rice pasta product obtainable with the process of any of the claims 1 through 6.

## Patentansprüche

1. Verfahren zur Herstellung von Reispasta bestehend aus den Phasen: a) Mischen von Reismehl mit Wasser von einer Temperatur von 10 bis 40° C, um einen Teig mit einem Feuchtigkeitsgehalt von 40 Gew.-% zu erhalten, b) Wärmebehandlung des Teiges in einer Strangpresse durch Berühren von beheizten Wänden und/oder mittels Dampfeinspritzungen, um ein Halbprodukt mit einer Temperatur von zwischen 60° und 90° C zu erhalten, und c) Kneten des Halbprodukts, Verpressen, Ziehen und schließlich Trocknen desselben, um eine getrocknete Reispasta mit einem Feuchtigkeitsgehalt von weniger als 15 Gew.-% zu erhalten, **dadurch gekennzeichnet, dass** das Reismehl in der Phase (a) aus einem Mehl und/oder Vollkornmehl aus parboiled Reis besteht.

2. Verfahren nach Anspruch 1, **dadurch gekennzeichnet, dass** das Mehl aus parboiled Reis aus einer Reissorte erhalten wird, die einen Amylosegehalt von mindestens 24 Gew.-% hat.

3. Verfahren nach Anspruch 1, **dadurch gekennzeichnet, dass** in der Phase a) das Mehl und/oder Vollkornmehl aus parboiled Reis zumindest einen zusätzlichen Bestandteil umfasst, gewählt aus der Gruppe, die Nährsubstanzen, Vitamine, Mineralsalze, Pflanzenfasern, Aroma- und Farbstoffe, Bindemittel und Speiseöle enthält.

4. Verfahren nach Anspruch 3, **dadurch gekennzeichnet, dass** der zusätzliche Bestandteil aus Reiskeimen, Reiskleie und/oder anderen Nebenprodukten aus der Reisverarbeitung besteht.

5. Verfahren nach Anspruch 3, **dadurch gekennzeichnet, dass** der zusätzliche Bestandteil aus Reiskeimen, Reiskleie und/oder anderen Nebenprodukten aus der Verarbeitung von parboiled Reis besteht.

6. Verfahren nach Anspruch 3, **dadurch gekennzeichnet, dass** der zusätzliche Bestandteil Hühnereiweiß ist.

7. Verfahren nach Anspruch 1, **dadurch gekennzeichnet, dass** das Mehl aus parboiled Reis von einer Reissorte mit pigmentierter Reiskleie erhalten wird.

8. Verfahren nach Anspruch 1, **dadurch gekennzeichnet, dass** das Mehl aus parboiled Reis von einer Reissorte mit einem besonderen aromatischen Geschmack erhalten wird.

9. Reispastaerzeugnis, das mit dem Verfahren nach irgendeinem der Ansprüche von 1 bis 6 erhalten werden kann.

## Revendications

1. Procédé de production de pâte de riz, comprenant les stades de : a) mélange de farine de riz à de l'eau à une température ambiante allant de 10° à 40°C, afin d'obtenir une pâte ayant une teneur en humidité de 40% en poids, b) traitement thermique de la pâte dans une extrudeuse par contact avec des parois chauffées et/ou par une injection de vapeur, afin d'obtenir un produit semi-fini ayant une température comprise entre 60° et 90°C, et c) malaxage du produit semi-fini, extrusion, étirage et finalement séchage de celui-ci, afin d'obtenir une pâte de riz séchée ayant une teneur en humidité en dessous de 15% en poids, **caractérisé en ce que** la farine de riz dans le stade a) consiste en de la farine de riz étuvée et/ou en de la farine de riz cargo étuvée.

2. Procédé suivant la revendication 1, **caractérisé en ce qu'**on obtient la farine de riz étuvée à partir d'une variété de riz ayant une teneur en amylose qui n'est pas inférieure à 24% en poids.

3. Procédé suivant la revendication 1, **caractérisé en ce que** dans le stade a) la farine de riz étuvée et/ou la farine de riz cargo étuvée comprend au moins un ingrédient supplémentaire choisi dans le groupe, contenant des substances nutritionnelles, des vitamines, des sels minéraux, des fibres végétales, des agents aromatisants, des colorants, des liants et des huiles comestibles.

4. Procédé suivant la revendication 3, **caractérisé en ce que** l'ingrédient supplémentaire est du germe de riz, du son de riz et/ou d'autres sous-produits du traitement du riz.

5. Procédé suivant la revendication 3, **caractérisé en ce que** l'ingrédient supplémentaire est du germe de riz, du son de riz et/ou d'autres sous-produits du traitement du riz étuvé.

6. Procédé suivant la revendication 3, **caractérisé en ce que** l'ingrédient supplémentaire est du blanc d'oeuf de poule.

7. Procédé suivant la revendication 1, **caractérisé en ce qu'**on obtient la farine de riz étuvée à partir d'une variété de riz ayant un son pigmenté.

8. Procédé suivant la revendication 1, **caractérisé en ce qu'**on obtient la farine de riz étuvée à partir d'une variété de riz dégageant un arôme particulier.

9. Produit de pâte de riz pouvant être obtenu par le procédé suivant l'une quelconque des revendications 1 à 6.
